# FASCICULE DE BREVET EUROPEEN

(11) **EP 1 119 240 B1**
(45) Date de publication et mention de la délivrance du brevet: **18.12.2002**
(21) Numéro de dépôt: 99947573.4
(22) Date de dépôt: 14.10.1999
(51) Int. Cl.: A01K 15/02

(54) **DISPOSITIF PERMETTANT DE JOUER AU BALLON AVEC UN CHIEN**
VORRICHTUNG UM MIT EINEM HUND BALL ZU SPIELEN
DEVICE FOR PLAYING BALL WITH A DOG

(30) Priorité: 16.10.1998 FR 9812992
(43) Date de publication de la demande: 01.08.2001
(73) Titulaire: Rocher, Norbert, 75014 Paris (FR)
(72) Inventeur: Rocher, Norbert, 75014 Paris (FR)
(74) Mandataire: Jacobson, Claude
(86) Numéro de dépôt international: FR9902493
(87) Numéro de publication internationale: WO00022920

(56) Documents cités:
- US-A- 4 321 888
- US-A- 5 207 420
- US-A- 5 265 559
- US-A- 5 351 652

## Description

Cette invention concerne le domaine des articles pour chiens et en particulier un dispositif permettant de jouer avec un chien avec un ballon ou analogue, tels qu'utilisé dans les sports d'équipes, destiné à être gonflé d'air mis sous pression, muni d'une valve de gonflage à fermeture automatique ou ballon de type prégonflé, de telle façon à ce qu'un chien puisse, entre autres, le ramener avec sa gueule sans le crever, du type constitué d'au moins une prise, ladite prise étant agencée pour être saisie par la gueule du chien, ledit ballon présentant au moins une circonférence médiane d'une largeur d'au moins 90 degrés de secteur angulaire par rapport au centre du ballon, dépourvue de toute prise saillant au-dessus de cette surface, afin de permettre au ballon de rouler dans au moins une direction.

Actuellement, il n'existe aucun ballon pour chiens, alors qu'il est beaucoup plus amusant de jouer au ballon avec un chien qu'à la balle. Tous les ballons actuels (football, handball, basket-ball, volley-ball,...) ne présentant aucune prise, le chien cherche à les pincer avec sa gueule pour pouvoir les prendre et les crève ainsi très rapidement. Cependant, pour la pratique du horse-ball, il existe un filet muni de six poignées, à travers les mailles duquel un ballon dégonflé est introduit pour être regonflé une fois dedans. Les six poignées en cuir, hautes et larges, entourent complètement le ballon interdisant tout roulement et tout rebond de ce dernier, comme l'exige la pratique de ce sport, par commodité pour les cavaliers. Ces poignées hautes et larges, conçues pour une préhension par une main humaine, s'avèrent totalement inadaptées et dangereuses pour le lancement au pied du ballon et pour une saisie par la gueule d'un chien. De plus, l'absence du roulement et du rebond de ce ballon enlève tout l'intérêt de jouer au ballon avec un chien. Certains ballons sont vendus dans un filet muni de deux fines poignées, pour les transporter plus facilement. Les poignées n'ayant pas une disposition de type radiale, elles ne peuvent pas se dresser, saillir, surplomber nettement au-dessus de l'enveloppe externe du ballon. Tout au contraire, elles ont tendance à se coucher contre l'enveloppe externe du ballon. De ce fait, le chien ne peut pas les saisir et cherche donc à pincer le ballon avec sa gueule pour pouvoir le prendre et le crève ainsi très rapidement. D'autre part, un brevet américain numéroté US 5,265,559, décrit un jouet pour chien constitué d'une prise flexible nouée à une prise en arc de cercle, elle-même rapportée à une portion de ballon. Ces deux prises n'étant pas allongées, n'ayant pas une certaine rigidité, n'ayant pas une base solidement attachée à la portion du ballon, ne possédant pas une articulation élastique avec le ballon à une position radiale d'équilibre, ces prises sont inadaptées pour un ballon gonflé d'air. Le chien ne pouvant pas facilement y accéder, il chercherait à saisir le ballon directement par son enveloppe externe et le crèverait ainsi très rapidement. De plus, la forme de ces prises et leur position sont un obstacle au bon roulement et rebond d'un ballon gonflé d'air. D'autre part, un brevet américain numéroté US 4,321,888, décrit une boule pour petit chien constitué de deux parties hémisphériques, jointes ensemble par une fine corde qui ressort par deux trous diamétralement opposés, pour venir se nouer ensemble à plusieurs reprises pour former une des prises. Cette corde, n'ayant aucune rigidité, se plie dès qu'elle ressort de cette boule pour se coucher à sa surface. Une même corde adaptée sur un ballon gonflé d'air, ne pourrait pas être saisie aisément par la gueule d'un chien. De ce fait, il chercherait à saisir le ballon gonflé d'air par son enveloppe externe et le crèverait ainsi très rapidement.

Cette présente invention apporte une solution à ces problèmes.

Elle a pour objet un dispositif du type précité, caractérisé en ce que ladite prise présente une forme oblongue suivant un axe longitudinal tel qu'un cylindre, un cône, une barre, une tige, ou telle qu'elle s'apparente à un objet comme, par exemple, un os, une saucisse, un boudin, et en ce que la partie de ladite prise la plus rapprochée du centre du ballon est rigide ou semi-rigide, pour qu'elle puisse se maintenir dressée d'elle-même, et en ce que ladite base de ladite prise définit avec la zone dudit ballon adjacente à cette dite base, une articulation, de façon que, sous un effort exercé latéralement sur ladite base de la prise, celle-ci se trouve dans une position telle que la prise saille nettement au-dessus de la zone du ballon où elle est située et surplombe, étant de ce fait toujours facilement accessible par la gueule du chien, le dissuadant ainsi de saisir directement le ballon par son enveloppe externe, ce qui entraînerait une crevaison rapide du ballon.

Elle a en outre pour objet l'utilisation d'un tel dispositif en tant que ballon de jeu pour chiens.

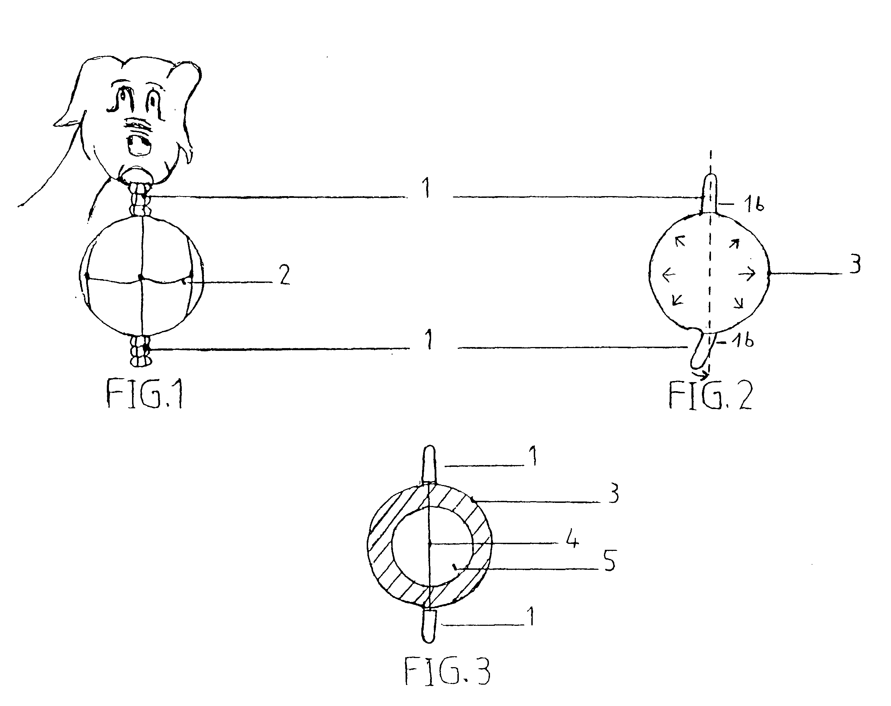

La figure 1 représente un ballon emprisonné dans un résistant filet (2), auquel sont attachées deux prises (1) opposées dont l'une est saisie par la gueule d'un chien.
La figure 2 représente la coupe médiane d'un ballon, dont les deux prises (1) allongées sont une extension de l'enveloppe externe (3) du ballon avec laquelle elles ont été moulées. Cette figure schématise aussi l'articulation élastique entre la base de la prise (1b) et la zone du ballon adjacente, qui repositionne toujours la prise (1) dans une position radiale d'équilibre.
La figure 3 représente la coupe médiane de l'enveloppe externe (3) d'un ballon dans laquelle une sangle (4) est totalement enroulée autour de la vessie interne (5) de ce ballon. Cette sangle (4) permet, à travers deux ouvertures opposées réalisées dans l'enveloppe externe (3) du ballon, à deux prises en boudin de s'y fixer.

Le dispositif permettant de jouer au ballon avec un chien est constitué d'au moins une prise (1), d'au moins un élément de liaison (2) (4), de l'enveloppe externe (3) et, pour certains modes de réalisation, de la vessie interne (5) d'un ballon.

Le jeu de ballon avec un chien n'est intéressant que si l'on peut shooter dans le ballon et que si celui-ci roule et rebondit bien. C'est pourquoi, le ballon de type sphérique utilisé dans les sports d'équipes, comme le football, le basket-ball, le volley-ball, le handball, est très approprié à cette pratique. Le ballon est de type sphérique par opposition aux ballons ovales utilisés, notamment, dans le rugby et le football américain. Le ballon sauteur, sur lequel un enfant s'assoit pour se déplacer par rebonds, est totalement inadapté à cette pratique, car il est trop volumineux pour être lancé et ramené par un chien, même de grosse taille. Un ballon, dont le diamètre est compris entre 15 centimètres et 40 centimètres, donne toute satisfaction. L'enveloppe externe (3) du ballon utilisée pour jouer avec un chien doit être inextensible, afin de rigidifier le ballon quand celui-ci est gonflé d'air, dissuadant ainsi le chien de le saisir avec sa gueule. Pour permettre au ballon de rebondir, ce qui est l'un des attraits de cette pratique, le ballon doit être gonflé d'air mis sous pression de façon à permettre un bon rebond et roulement de ce ballon. Comme la pression interne d'air doit être très importante pour rigidifier le ballon, ce résultat est obtenu grâce à une valve de gonflage à fermeture automatique ou grâce à un ballon de type prégonflé. Par opposition, le ballon de plage, muni d'une valve de gonflage à la bouche garnie d'un capuchon, manque de rigidité à cause d'une pression interne d'air insuffisante. De ce fait, un chien peut le saisir avec sa gueule et le crever ainsi très rapidement.

Pour dissuader le chien de saisir le ballon par son enveloppe externe (3), ce qui aurait pour conséquence immédiate de le crever, la prise (1) doit être toujours facilement accessible pour la gueule du chien. Pour se faire, il est impératif que la prise (1) se dresse, saille, surplombe nettement au-dessus de la zone du ballon où elle est située. Pour se faire, la prise (1) doit être, au moins pour sa base (1b), c'est-à-dire pour la partie de la prise (1) la plus rapprochée de l'enveloppe externe (3) du ballon, toujours disposée selon un axe radial par rapport au centre du ballon. Pour se faire, au moins la base de la prise (1b) doit être rigide pour lui éviter de s'incurver, de se plier, de se coucher sur la surface externe de l'enveloppe externe (3) du ballon. Pour se faire, la base de la prise (1b) doit être maintenue par rapport au ballon de manière solide, ferme, stable, pour tenter de se maintenir dans une position radiale par rapport au centre du ballon, en résistant aux forces de contrainte extérieures exercées sur elle. Cependant, la base de la prise (1b) rigide, disposée fermement de manière radiale par rapport au centre du ballon, freine les déplacements de ce ballon (franchissement d'obstacles, forces de frottement dans l'air,...). C'est pourquoi la base de la prise (1b) doit s'articuler par rapport au ballon, de façon à pouvoir fléchir, par exemple, lorsqu'elle butte contre un obstacle, dans l'air pour limiter les forces de frottement,... Mais, l'axe longitudinal de la base de la prise (1b) doit systématiquement se repositionner selon un axe radial par rapport au centre du ballon, dès que les forces de contrainte extérieures exercées sur elle cessent, pour que la prise (1) soit toujours facilement accessible par la gueule du chien. Pour se faire, le ballon qui est gonflé d'air mis sous pression et plus particulièrement la zone de ce ballon située à proximité de la prise (1), possède des propriétés de déformations élastiques. A titre indicatif, cette prise peut être fabriquée par un morceau de tuyau de caoutchouc, dont la base est rigidifiée en y introduisant une vis. La totalité de la prise (1) peut être aussi rigide. A titre indicatif, une prise (1) rigide peut être constituée par le tressage de quatre brins de drisse à la manière d'un Scoubidou. De même, la prise (1) peut être un boudin en plastique dur. A l'inverse, une prise (1) constituée par une fine corde, qui ressortirait à travers l'enveloppe externe (3) d'un ballon par un orifice, se déformerait sous l'action de la pesanteur, sans s'élever distinctement et en permanence au-dessus de la surface externe de l'enveloppe externe (3) du ballon. De même, une prise (1) constituée par une chaîne subirait le même résultat, les maillons de cette chaîne étant mobiles les uns par rapport aux autres.

Pour que le ballon puisse rouler dans au moins une direction, ce qui est l'un des intérêts de cette pratique, aucune prise (1) ne doit saillir au-dessus de la surface externe de l'enveloppe externe (3) du ballon, dans une zone circulaire médiane de 360 degrés de long et de 90 degrés de large.

La forme de la prise (1) doit être allongée, représentant, par exemple, un cylindre, un os, une saucisse, un boudin, un cône. Cette prise de forme allongée est la plus adaptée à la préhension par la gueule du chien. En effet, la prise (1) se trouve coincée dans la gueule du chien, transversalement, à l'arrière de ses dents canines, entre ses dents prémolaires. Le ballon pend sur le côté de la gueule du chien (ce qui permet au chien d'avoir une bonne visibilité et le museau libre). Cette prise doit mesurer approximativement la largeur de la gueule du chien, de façon à être coincée simultanément par les deux demi-mâchoires droites et gauches. Lors des efforts de traction, la prise (1) ne peut que glisser transversalement entre les dents du chien sans les endommager. A l'inverse, une prise en forme d'anneau s'avère dangereuse pour la dentition du chien. En effet, l'anneau passant derrière les incisives du chien, les efforts de traction sur cette prise tendent à lui luxer ses dents et sa mâchoire inférieure. De plus, une prise allongée ne contrarie que très peu le roulement et le rebond d'un ballon. En effet, le mode de réalisation optimale de ce dispositif consiste à placer deux prises allongées à la périphérie d'un ballon, disposées de façon diamétralement opposées et dans un axe radial par rapport au centre du ballon, de façon à s'apparenter à un axe de rotation. De ce fait, le ballon est équilibré lors de ses déplacements, décrivant ainsi des trajectoires rectilignes. A l'inverse, si les deux prises sont situées l'une à côté de l'autre, comme pour le ballon sauteur, ou s'il n'existe qu'une seule prise, le ballon est déséquilibré décrivant une trajectoire courbe. En conséquence de quoi, le ballon ne se déplace pas très loin, le lanceur du ballon ne peut pas atteindre un objectif précis, le chien a des difficultés à saisir la prise, celle-ci venant au contact du sol. Aussi, une prise (1) trop longue (supérieure à 10 cm) compromettrait le roulement et le rebond du ballon, sans améliorer sa préhension par la gueule du chien. Pour ces mêmes raisons, la base de la prise (1b), doit avoir une section réduite et unique. Une prise en poignée, qui possède donc une section double de sa base, gêne les mouvements du ballon. La prise (1) idéale est un segment de cylindre de 8 à 10 cm de long et de 2 cm de diamètre. Par opposition, une prise en forme de pyramide, de 3 cm de haut et dont la base carrée (partie de la prise la plus rapprochée de la surface externe de l'enveloppe externe du ballon) mesure 5 cm de côté, est à proscrire. De même, le ballon pouvant être lancé à la main comme au pied, une prise en forme de poignée, où le pied risquerait de s'y coincer, est à bannir. La prise (1) doit être d'une taille suffisante pour permettre une bonne préhension par la gueule du chien, mais pas trop importante pour ne pas contrarier les mouvements du ballon, fabriquée dans un matériau qui n'altère pas la dentition du chien et qui résiste aux crocs du chien. A titre indicatif, deux morceaux d'une drisse d'un gros diamètre (8 mm) et d'une longueur approximative de 40 cm peuvent être tressés ensemble pour former une prise (1) grossièrement cylindrique, dont l'extrémité est fondue par chauffage pour éviter tout effilochage. Deux prises (1) seulement, situées en opposition à la périphérie d'un ballon, suffisent à une préhension rapide par un chien, en entravant que très peu la mobilité du ballon.

La base de la prise (1b) peut être liée, soit avec un élément de recouvrement ou d'enveloppement (2) total ou ajouré disposé autour du ballon, soit avec un élément interne intercalé (4) entre l'enveloppe externe (3) et la vessie interne (5) du ballon, soit avec l'enveloppe externe (3) et/ou la vessie interne (5) d'un ballon. L'élément de recouvrement ou d'enveloppement (2), qui subit des tractions importantes et des tentatives de déchirement par les crocs du chien, doit être résistant. C'est pourquoi les filets actuels, servant à accrocher les ballons dans les magasins, ne peuvent pas être utilisés, car ils se déchirent très vite. De plus, ces filets n'épousant pas totalement la forme sphérique du ballon, celui-ci roule et rebondit difficilement. L'élément de recouvrement ou d'enveloppement (2) enveloppant totalement ou partiellement le ballon, celui-ci se trouve donc ainsi emprisonné dans cette enveloppe de laquelle le ballon peut être extrait, soit par dégonflement, soit par un mécanisme d'ouverture prévu dans cette enveloppe. Il peut s'agir, par exemple, d'un sac ayant la forme du ballon et muni d'un mécanisme d'ouverture à fermeture éclair, à lacet, à boucle, à bouton,..., et à la surface duquel est attachée au moins une prise (1) en saucisse. Il est préférable que l'élément de recouvrement ou d'enveloppement (2) soit très réduit pour ne pas alourdir le ballon s'il est mouillé. L'élément de recouvrement (2) peut être un lien. Ce lien, dont la forme (arrondie, aplatie,...), la matière naturelle (coton, cuir,...) ou synthétique («Nylon» -marque déposée-, «Kevlar» -marque déposée-,...), la constitution (tressée ou non), les dimensions (section de préférence supérieure à 0,5 mm²), la couleur, peuvent être variables, peut être notamment une drisse, un fil de pêche en «Nylon» -marque déposée- ou un fil en «Kevlar» -marque déposée-. A titre indicatif, une drisse de trois millimètres de diamètre peut s'enrouler autour d'un ballon en décrivant trois cercles, situés dans trois plans perpendiculaires entre eux, solidarisés les uns aux autres par des noeuds, à certaines intersections desquels s'attache une prise (1).

L'élément interne intercalé (4) entre l'enveloppe externe (3) et la vessie interne (5) du ballon peut être une sangle. A titre indicatif, une sangle d'une faible épaisseur et d'une petite largeur (20 mm) est introduite à l'intérieur d'un ballon pour s'enrouler autour de sa vessie interne (5), afin que ses deux extrémités ressortent ensemble par une même ouverture dans l'enveloppe externe (3) du ballon, alors qu'une double épaisseur de cette sangle ressort par une autre ouverture opposée à la première.

La base de la prise (1) peut être liée directement avec l'enveloppe externe (3) d'un ballon. La matière (cuir, plastique,...), les dimensions (épaisseur et diamètre), la couleur de cette enveloppe peuvent être variables. A titre indicatif, deux prises (1) peuvent être cousues à l'enveloppe externe (3) en cuir d'un ballon.

La prise (1) est, soit une extension du moyen de liaison, soit rapportée à ce dernier. Dans le premier cas, la prise (1) peut être moulée avec l'enveloppe externe (3) du ballon. Elle peut aussi être une prolongation des liens entourant le ballon, de l'élément interne intercalé (4) entre l'enveloppe externe (3) et la vessie interne (5) du ballon. A titre indicatif, deux longues drisses sont tressées ensemble à la manière d'un Scoubidou pour former une première prise (1). Puis, elles encerclent un ballon pour former un résistant filet (2). Enfin, elles sont de nouveau tressées ensemble pour former une deuxième prise (1). Dans le second cas, la base de la prise (1b) peut être reliée à l'élément de recouvrement ou d'enveloppement (2) ou à l'élément interne intercalé (4) entre l'enveloppe externe (3) et la vessie interne (5) d'un ballon, par un robuste noeud, par couture, par collage,... La base de la prise (1b) peut être fixée à l'enveloppe externe (3) du ballon par vissage, par emboîtement,... A titre indicatif, la prise (1) peut se visser sur une vis en plastique à tête large ressortant à travers l'enveloppe externe (3) d'un ballon. A titre indicatif, une vis, dont la tête plate est intercalée entre enveloppe externe (3) et un élément de recouvrement (2) traverse l'élément de recouvrement (2) pour se fixer dans la base d'une prise (1b). A titre indicatif, deux fils métalliques peuvent se croiser sous l'intersection de deux mailles d'un filet, disposé autour d'un ballon, pour réapparaître au-dessus de cette intersection, avant de se fixer dans un boudin en plastique. Dans cette exemple, la base de la prise (1b) est disposée autour d'une partie de l'élément de recouvrement (2), contrairement à l'exemple précédent, où la base de la prise (1b) traversait l'élément de recouvrement (2). Dans le cas où la base de la prise (1b) est liée avec une zone de l'enveloppe externe (3) du ballon, lorsqu'elle est désaxée par une force de contrainte extérieure, la base de la prise (1b) exerce une surpression du côté où elle s'incline et une dépression du côté opposé. La pression interne d'air du ballon résiste à cette déformation et repositionne, dès que la force de contrainte extérieure cesse, l'axe de la base de la prise (1b) selon un axe radial par rapport au centre du ballon.

Ce dispositif permet à un chien de ramener un ballon sans le crever, mais aussi à plusieurs chiens de s'amuser ensemble en tirant le ballon par chacune des prises.

Cette invention est susceptible d'intéresser les fabricants d'articles pour chiens.

## Revendications

1. Dispositif permettant de jouer avec un chien avec un ballon ou analogue, tels qu'utilisé dans les sports d'équipes, destiné à être gonflé d'air mis sous pression, muni d'une valve de gonflage à fermeture automatique ou ballon de type prégonflé, de telle façon à ce qu'un chien puisse, entre autres, le ramener avec sa gueule sans le crever, du type constitué d'au moins une prise (1), ladite prise (1) étant agencée pour être saisie par la gueule du chien, ledit ballon présentant au moins une circonférence médiane d'une largeur d'au moins 90 degrés de secteur angulaire par rapport au centre du ballon, dépourvue de toute prise (1) saillant au-dessus de cette surface, afin de permettre au ballon de rouler dans au moins une direction, **caractérisé en ce que** ladite prise (1) présente une forme oblongue suivant un axe longitudinal tel qu'un cylindre, un cône, une barre, une tige, ou telle qu'elle s'apparente à un objet comme, par exemple, un os, une saucisse, un boudin, et **en ce que** la partie de ladite prise (1) la plus rapprochée du centre du ballon est rigide ou semi-rigide, pour qu'elle puisse se maintenir dressée d'elle-même, et **en ce que** ladite base de ladite prise (1b) définit avec la zone dudit ballon adjacente à cette dite base (1b), une articulation, de façon que, sous un effort exercé latéralement sur ladite base de la prise (1b), celle-ci se trouve dans une position telle que la prise (1) saille nettement au-dessus de la zone du ballon où elle est située et surplombe, étant de ce fait toujours facilement accessible par la gueule du chien, le dissuadant ainsi de saisir directement le ballon par son enveloppe externe (3), ce qui entraînerait une crevaison rapide du ballon.

2. Dispositif selon la revendication 1, **caractérisé en ce que** l'articulation de ladite base de la prise (1b) est une articulation élastique de sorte que, après un effort exercé latéralement sur ladite base de la prise (1b), celle-ci revienne dans une position d'équilibre.

3. Dispositif selon la revendication 2, **caractérisé en ce que**, dans la position d'équilibre, l'axe longitudinal de la base de la prise (1b) passe sensiblement par le centre dudit ballon.

4. Dispositif selon l'une quelconque des revendications précédentes, **caractérisé en ce que** la base de la prise (1b) est solidement, fermement, liée à un élément de recouvrement ou d'enveloppement (2), total ou ajouré, fabriqué dans un matériau résistant, tel que le plastique, le cordage synthétique, le cordage naturel, la drisse, le «Kevlar» -marque déposée-, la sangle synthétique, la sangle naturelle, destiné à être disposé tout autour d'un ballon en épousant étroitement sa forme, au moins temporairement le temps de son utilisation avec un chien, l'articulation élastique à position d'équilibre s'effectuant entre l'élément de recouvrement (2) et la zone du ballon adjacente à la base de la prise (1b), grâce à la déformation élastique de cette zone du ballon.

5. Dispositif selon la revendication 4, **caractérisé en ce que** l'élément de recouvrement ou d'enveloppement (2) est un cordage, une sangle, enroulé autour d'un ballon de façon à décrire au moins trois circonférences, tels que des cercles, situées dans au moins trois plans distincts entre eux, solidarisées les unes aux autres afin d'emprisonner le ballon dans un résistant filet, duquel le ballon peut être extrait et réintroduit par dégonflement.

6. Dispositif selon la revendication 4, **caractérisé en ce que** la base de la prise (1b) traverse l'élément de recouvrement ou d'enveloppement (2), afin qu'une partie de la base de la prise (1b) soit intercalée entre l'élément de recouvrement ou d'enveloppement (2) et l'enveloppe externe (3) du ballon.

7. Dispositif selon la revendication 4, **caractérisé en ce que** la base de la prise (1b) est disposée autour d'une partie de l'élément de recouvrement ou d'enveloppement (2), afin qu'une partie de la base de la prise (1b) soit intercalée entre l'élément de recouvrement ou d'enveloppement (2) et l'enveloppe externe (3) du ballon.

8. Dispositif selon l'une quelconque des revendications 1 à 3, **caractérisé en ce que** la base de la prise (1b) est solidement, fermement, liée directement à une zone de l'enveloppe externe (3) d'un ballon, par exemple, par collage, par couture, par réalisation en une seule et même pièce en matière plastique moulée, l'articulation élastique à une position d'équilibre s'effectuant alors entre la base de la prise (1b) et la zone du ballon adjacente à la base de la prise (1b), grâce à la déformation élastique de cette zone du ballon.

9. Dispositif selon l'une quelconque des revendications 1 à 3, **caractérisé en ce que** la base de la prise (1b) est solidement, fermement, liée à un élément interne intercalé (4), telle qu'une pastille, une bande, la tête d'une vis, entre la vessie interne (5) et l'enveloppe externe (3) d'un ballon, dont cette dernière est pourvue d'au moins une ouverture, afin de permettre la liaison entre l'élément interne intercalé (4) et la base de la prise (1b), l'articulation élastique à position d'équilibre s'effectuant alors entre l'éiément interne intercalé (4) et la zone du ballon adjacente à l'élément interne intercalé (4), grâce à la déformation élastique de cette zone du ballon.

10. Dispositif selon l'une quelconque des revendications 1 à 3, **caractérisé en ce que** la base de la prise (1b) est solidement, fermement, liée à une zone de la vessie interne (5) d'un ballon, dont l'enveloppe externe (3) est pourvue d'au moins une ouverture, afin de permettre la liaison entre la vessie interne (5) et la base de la prise (1b), l'articulation élastique à une position d'équilibre s'effectuant alors entre la base de la prise (1b) et la zone du ballon adjacente à la base de la prise (1b), grâce à la déformation élastique de cette zone du ballon.

11. Dispositif selon l'une quelconque des revendications précédentes, **caractérisé en ce que** la base de la prise (1b) est rapportée à l'élément avec lequel elle est liée.

12. Dispositif selon l'une quelconque des revendications 1 à 10, **caractérisé en ce que** la base de la prise (1b) est une extension de l'élément avec lequel elle est liée.

13. Dispositif selon l'une quelconque des revendications précédentes, **caractérisé en ce que** la prise (1) est réalisée en matière plastique, en caoutchouc, en cordage, en textile, pour lui assurer une bonne résistance sans blesser la gueule d'un chien.

14. Dispositif selon l'une quelconque des revendications précédentes,
**caractérisé en ce que** les prises (1), quand elles sont au moins au nombre de deux, sont disposées par rapport au ballon de manière diamétralement opposées, de façon à ne pas déséquilibrer le ballon lors de ses déplacements, pour qu'il décrive des parcours rectilignes,

15. Dispositif selon l'une quelconque des revendications précédentes, **caractérisé en ce que** la totalité de la prise (1) est rigide.

16. Dispositif selon la revendication 5, **caractérisé en ce que** la prise (1) est un boudin de plastique dur relié à l'élément de recouvrement (2) par au moins une attache métallique.

17. Dispositif selon l'une quelconque des revendications précédentes, **caractérisé en ce que** le ballon est de forme sphérique.

18. Dispositif selon la revendication 17, **caractérisé en ce que** le ballon est de diamètre compris entre 15 et 40 cm.

19. Utilisation d'un dispositif selon l'une quelconque des revendications précédentes en tant que ballon de jeu pour chiens.

## Claims

1. Device making it possible to play ball with a dog using a ball or the like, as used in team sports, intended to be inflated with pressurized air, equipped with an automatic shut-off inflation valve or ball of the preinflated type, so that a dog can, among other things, bring it back in his mouth without puncturing it, of the type consisting of at least one grip (1), said grip (1) being designed to be grasped in the mouth of the dog, said ball having at least a median circumference of a width of at least 90° of angular sector with respect to the center of the ball free of any grip (1) protruding from this surface so as to allow the ball to roll in at least one direction, **characterized in that** said grip (1) has an oblong shape along a longitudinal axis, such as the shape of a cylinder, a cone, a bar, a rod or such that it resembles an object such as, for example, a bone or a sausage, and **in that** the part of said grip (1) closest to the center of the ball is rigid or semi-rigid so that it can keep itself erect and **in that** said base of said grip (1b) defines, with the zone of said ball adjacent to this said base (1b), an articulation such that, under the effect of a force exerted laterally on said base of the grip (1b), the latter finds itself in a position such that the grip (1) protrudes to a marked extent beyond the zone of the ball where it is located and projects, it therefore being readily accessible to the mouth of the dog, thus dissuading the dog from gripping the ball directly by its outer cover (3) as this would soon cause the ball to be punctured.

2. Device according to claim 1, **characterized in that** the articulation of said base of the grip (1b) is an elastic articulation so that when a force has been exerted laterally on said base of the grip (1b), the latter returns to a position of equilibrium.

3. Device according to claim 2, **characterized in that**, in the position of equilibrium, the longitudinal axis of the base of the grip (1b) passes more or less through the center of said ball.

4. Device according to any one of the preceding claims, **characterized in that** the base of the grip (1b) is securely and firmly connected to a full or perforated wrapping or enveloping element (2) made of a strong material such as plastic, synthetic cord, natural cord, lashing, Kevlar (trade name), synthetic strapping, natural strapping, intended to be run right around a ball, closely following its shape, at least temporarily while the ball is being used with a dog, the elastic articulation with a position of equilibrium being between the wrapping element (2) and the zone of the ball adjacent to the base of the grip (1b) by virtue of the elastic deformation of this zone of the ball.

5. Device according to claim 4, **characterized in that** the wrapping or enveloping element (2) is cording or strapping wrapped around a ball in such a way as to describe at least three circumferences, such as circles, located in at least three mutually different planes, secured together so as to trap the ball in a strong net, from which the ball can be extracted and reintroduced by deflating.

6. Device according to claim 4, **characterized in that** the base. of the grip (1b) passes through the wrapping or enveloping element (2) so that part of the base of the grip (1b) is inserted between the wrapping or enveloping element (2) and the outer cover (3) of the ball.

7. Device according to claim 4, **characterized in that** the base of the grip (1b) is arranged around a part of the wrapping or enveloping element (2) so that part of the base of the grip (1b) is inserted between the wrapping or enveloping element (2) and the outer cover (3) of the ball.

8. Device according to any one of claims 1 to 3, **characterized in that** the base of the grip (1b) is securely and firmly connected directly to a zone of the outer cover (3) of a ball, for example by bonding, sewing, by making it as one and the same piece of molded plastic, the elastic articulation with a position of equilibrium then being between the base of the grip (1b) and the zone of the ball adjacent to the base of the grip (1b) by virtue of the elastic deformation of this zone of the ball.

9. Device according to any one of claims 1 to 3, **characterized in that** the base of the grip (1b) is securely and firmly connected to an inserted internal element (4) such as a block, a strip, the head of a screw, between the internal bladder (5) and the outer cover (3) of a ball, the outer cover of which ball has at least one opening so as to allow the connection between the inserted internal element (4) and the base of the grip (1b), the elastic articulation with a position of equilibrium then being between the inserted internal element (4) and the zone of the ball adjacent to the inserted internal element (4) by virtue of the elastic deformation of this zone of the ball.

10. Device according to any one of claims 1 to 3, **characterized in that** the base of the grip (1b) is securely and firmly connected to a zone of the internal bladder (5) of a ball, the outer cover (3) of which has at least one opening so as to allow the connection between the internal bladder (5) and the base of the grip (1b), the elastic articulation with a position of equilibrium then being between the base of the grip (1b) and the zone of the ball adjacent to the base of the grip (1b) by virtue of the elastic deformation of this zone of the ball.

11. Device according to any one of the preceding claims, **characterized in that** the base of the grip (1b) is attached to the element to which it is connected.

12. Device according to any one of claims 1 to 10, **characterized in that** the base of the grip (1b) is an extension of the element to which it is connected.

13. Device according to any one of the preceding claims, **characterized in that** the grip (1) is made of plastic, of rubber, of cord, of textile, to give it good strength without injuring the mouth of a dog.

14. Device according to any one of the preceding claims, **characterized in that** the grips (1), when there are at least two of these, are arranged with respect to the ball so that they are diametrically opposed so as not to unbalance the ball as it moves, so that it can travel in a straight line.

15. Device according to any one of the preceding claims, **characterized in that** the entirety of the grip (1) is rigid.

16. Device according to claim 5, **characterized in that** the grip (1) is a hard plastic sausage connected to the wrapping element (2) by at least one metal fastener.

17. Device according to any one of the preceding claims, **characterized in that** the ball is of spherical shape.

18. Device according to claim 17, **characterized in that** the ball has a diameter of between 15 and 40 cm.

19. Use of a device according to any one of the preceding claims as a ball for playing with dogs.

## Patentansprüche

1. Vorrichtung, um mit einem Hund Ball o. dgl. zu spielen, so wie bei Mannschaftssportarten geübt, der mit Druckluft aufzublasen und mit einem Aufblasventil mit automatischer Schließung versehen ist, oder Ball des bereits aufgeblasenen Typs, derart, daß ein Hund, unter anderem, ihn mit seiner Schnauze zurückholen kann, ohne ihn zum Zerplatzen bringen, in einer Ausführung, die zumindest von einem Griff (1) gebildet ist, wobei der Griff (1) für ein Erfaßtwerden von der Schnauze des Hundes eingerichtet ist und der Ball zumindest einen Mittenumfang von einer Größe von zumindest 90° Winkelausschnitt in Bezug auf den Ballmittelpunkt, frei von jedem über diese Oberfläche vorspringen den Griff (1), aufweist, damit der Ball in zumindest einer Richtung rollen kann, **dadurch gekennzeichnet, daß** der Griff (1) eine längliche Form entlang einer Längsachse darbietet, wie einen Zylinder, einen Kegel, einen Stab oder eine Stange, oder eine solche, die einem Gegenstand gleicht, wie zum Beispiel einem Knochen, einem Würstchen oder einer Rolle, daß der dem Ballmittelpunkt nächstgelegene Bereich des Griffes (1) steif oder halbstarr ist, damit er sich von selbst aufrecht halten kann, und daß die Griffbasis (1b) mit der an die Basis (1b) angrenzenden Zone des Balls eine Gelenkverbindung bildet, derart, daß sich die Griffbasis (1b) unter einer seitlich auf sie ausgeübten Kraft in einer solchen Stellung befindet, daß der Griff (1) deutlich über die Zone des Balles vorspringt, wo er gelegen ist und übersteht, so daß er auf Grund dieser Tatsache stets leicht durch die Schnauze des Hundes zugänglich ist und ihn so davon abbringt, den Ball direkt mit seiner Außenhülle (3) zu erfassen, was ein schnelles Zerplatzen des Balles nach sich ziehen würde.

2. Vorrichtung nach Anspruch 1, **dadurch gekennzeichnet, daß** die Gelenkverbindung der Griffbasis (1b) eine elastische Gelenkverbindung ist, derart, daß die Griffbasis (1b) nach einer seitlich auf sie ausgeübten Kraft in eine Gleichgewichtslage zurückkehrt.

3. Vorrichtung nach Anspruch 2, **dadurch gekennzeichnet, daß**, in der Gleichgewichtslage, die Längsachse der Griffbasis (1b) im wesentlichen durch die Mitte des Balles verläuft.

4. Vorrichtung nach einem der vorhergehenden Ansprüche, **dadurch gekennzeichnet, daß** die Griffbasis (1b) dauerhaft und fest mit einem Deck- oder Hüllelement (2), ganz oder durchbrochen, verbunden ist, das aus einem widerstandsfähigen Material hergestellt ist, wie Kunststoff, Synthetikband, Naturband, Seil, "Kevlar"- eingetragene Marke -, Synthetikgurt oder Naturgurt, dazu bestimmt, rund um einen Ball unter enger Anpassung an dessen Form zumindest zeitweilig während der Zeit seiner Benutzung mit einem Hund angeordnet zu werden, wobei die elastische Gelenkverbindung mit Gleichgewichtslage zwischen dem Deckelement (2) und der an die Griffbasis (1b) angrenzenden Zone des Balles dank der elastischen Verformung dieser Ballzone ausgebildet ist.

5. Vorrichtung nach Anspruch 4, **dadurch gekennzeichnet, daß** das Deckoder Hüllelement (2) ein Band oder Gurt ist, das/der um einen Ball derart gewickelt ist, daß zumindest drei Umfänge beschrieben werden, wie Kreise, die in zumindest drei voneinander verschiedenen Ebenen liegen und untereinander fest verbunden sind, um den Ball in einem widerstandsfähigen Netz einzufassen, aus dem der Ball unter Luftablassen herausgenommen und wieder eingesetzt werden kann.

6. Vorrichtung nach Anspruch 4, **dadurch gekennzeichnet, daß** die Griffbasis (1b) das Deck- oder Hüllelement (2) durchquert, so daß ein Bereich der Griffbasis (1b) zwischen dem Deck- oder Hüllelement (2) und der Außenhülle (3) des Balles zwischengeschaltet ist.

7. Vorrichtung nach Anspruch 4, **dadurch gekennzeichnet, daß** die Griffbasis (1b) um einen Bereich des Deck- oder Hüllelements (2) angeordnet ist, so daß ein Bereich der Griffbasis (1b) zwischen dem Deck- oder Hüllelement (2) und der Außenhülle (3) des Balles zwischengeschaltet ist.

8. Vorrichtung nach einem der Ansprüche 1 bis 3, **dadurch gekennzeichnet, daß** die Griffbasis (1b) dauerhaft und fest direkt mit einer Zone der Außenhülle (3) eines Balles verbunden ist, zum Beispiel durch Kleben, Nähen oder durch Herstellung in einem Stück aus geformtem Kunststoff, wobei die elastische Gelenkverbindung mit einer Gleichgewichtslage sodann zwischen der Griffbasis (1b) und der an die Griffbasis (1b) angrenzenden Zone des Balles dank der elastischen Verformung dieser Ballzone ausgebilet ist.

9. Vorrichtung nach einem der Ansprüche 1 bis 3, **dadurch gekennzeichnet, daß** die Griffbasis (1b) dauerhaft und fest mit einem zwischengeschalteten Innenelement (4) verbunden ist, wie einer Scheibe, einem Band oder dem Kopf einer Schraube, zwischen der Innenblase (5) und der Außenhülle (3) eines Balles, von denen die letztere mit zumindest einer Öffnung versehen ist, um die Verbindung zwischen dem zwischengeschalteten Innenelement (4) und der Griffbasis (1b) zu ermöglichen, wobei die elastische Gelenkverbindung mit Gleichgewichtslage sodann zwischen dem zwischengeschalteten Innenelement (4) und der an das zwischengeschaltete Innenelement (4) angrenzenden Zone des Balles dank der elastischen Verformung dieser Ballzone ausgebildet ist.

10. Vorrichtung nach einem der Ansprüche 1 bis 3, **dadurch gekennzeichnet, daß** die Griffbasis (1b) dauerhaft und fest mit einer Zone der Innenblase (5) eines Balles verbunden ist, von dem die Außenhülle (3) mit zumindest einer Öffnung versehen ist, um die Verbindung zwischen der Innenblase (5) und der Griffbasis (1b) zu ermöglichen, wobei die elastische Gelenkverbindung mit Gleichgewichtslage sodann zwischen der Griffbasis (1b) und der an die Griffbasis (1b) angrenzenden Zone des Balles dank der elastischen Verformung dieser Ballzone ausgebildet ist.

11. Vorrichtung nach einem der vorhergehenden Ansprüche, **dadurch gekennzeichnet, daß** die Griffbasis (1b) dem Element zugeordnet ist, mit dem sie verbunden ist.

12. Vorrichtung nach einem der Ansprüche 1 bis 10, **dadurch gekennzeichnet, daß** die Griffbasis (1b) eine Verlängerung des Elementes ist, mit dem sie verbunden ist.

13. Vorrichtung nach einem der vorhergehenden Ansprüche, **dadurch gekennzeichnet, daß** der Griff aus Kunststoff, Kautschuk, Band oder Textilmaterial gebildet ist, um ihm eine gute Widerstandsfähigkeit, ohne die Schnauze eines Hundes zu verletzten, zu vermitteln.

14. Vorrichtung nach einem der vorhergehenden Ansprüche, **dadurch gekennzeichnet, daß** die Griffe (1), wenn sie zumindest in der Zahl zwei vorhanden sind, in Bezug auf den Ball diametral einander gegenüber liegend angeordnet sind, um den Ball bei seinen Bewegungen nicht unwuchtig zu machen, damit er geradlinige Wege beschreibt.

15. Vorrichtung nach einem der vorhergehenden Ansprüche, **dadurch gekennzeichnet, daß** der Griff (1) insgesamt steif ist.

16. Vorrichtung nach Anspruch 5, **dadurch gekennzeichnet, daß** der Griff (1) eine Rolle aus hartem Kunststoff ist, die mit dem Deckelement (2) durch zumindest ein metallenes Verbindungselement verbunden ist.

17. Vorrichtung nach einem der vorhergehenden Ansprüche, **dadurch gekennzeichnet, daß** der Ball Kugelform hat.

18. Vorrichtung nach Anspruch 17, **dadurch gekennzeichnet, daß** der Ball einen Durchmesser von 15 bis 40 cm hat.

19. Verwendung einer Vorrichtung nach einem der vorhergehenden Ansprüche als Spielball für Hunde.
